# EUROPÄISCHE PATENTSCHRIFT

(11) **EP 0 935 949 B1**
(45) Veröffentlichungstag und Bekanntmachung des Hinweises auf die Patenterteilung: **03.11.2004**
(21) Anmeldenummer: 98250395.5
(22) Anmeldetag: 11.11.1998
(51) Int. Cl.: A61C 8/00

(54) **Laterales Kieferimplantat**
Lateral dental implant
Implant dentaire latéral

(30) Priorität: 11.02.1998 DE 29802316 U; 17.07.1998 DE 29812642 U
(43) Veröffentlichungstag der Anmeldung: 18.08.1999
(73) Patentinhaber: Ihde, Stefan, Dr., 80802 München (DE)
(72) Erfinder: Ihde, Stefan, Dr., 80802 München (DE); Spahn, Frank-Peter, Dr., 8738 Uetliburg (CH)
(74) Vertreter: Radwer, Dieter

(56) Entgegenhaltungen:
- WO-A-85/04321
- FR-A- 2 302 715
- US-A- 3 474 537

## Beschreibung

Die Erfindung betrifft ein weiter verbessertes laterales, basales Kieferimplantat zur Aufnahme und Befestigung einer Krone, einer Prothese, eines Stegs oder einer Brücke.

Die bisher bekannten lateralen Kieferimplantate bestehen im wesentlichen aus einem Fußteil und einem mit dem Fußteil fest verbundenen Schaft. Der Schaft trägt im Kopfbereich seiner freien Stirnfläche ein Gewinde zur Befestigung einer prothetischen Überkonstruktion oder bildet selbst einen einfachen Pfosten für die Zementierung einer Krone oder einer Brücke.

Neben diesen T-förmigen Implantaten, die in einem gleichförmigen, im Kieferknochen durch Ausfräsung hergestellten Gang eingeführt werden, und bei denen der Schaft des Implantats in den Fußteil eingesetzt und mit diesem verschweißt ist, ist aus FR 2 302 715 ein weiterverbessertes einstückiges Zahnimplantat bekannt gemäß dem Oberbegriff von Anspruch 1. Dieses einstückige Zahnimplantat besitzt, wie vorstehend beschrieben, ein kopfseitiges Aufnahmegewinde, auf das nach Bildung eines ausreichenden Bindegewebes im Kieferknochen und einem ausreichenden festen Sitz des Implantates ein Abutement zur Aufnahme und Befestigung der prothetischen Überkonstruktion aufgeschraubt wird.

Trotz der zweifelsfrei vorhandenen Vorteile dieses Implantats durch die einstückige Ausbildung von Fußteil und Schaft in Hinblick auf den Heilungsprozeß des eingesetzten Implantats im Unterkiefer- oder Oberkieferknochen ist das notwendige intraoperative Verschrauben von Abutement und Implantat insofern von Nachteil, daß ein Einschrauben des Abutements zur Aufnahme der prothetischen Überkonstruktion in die gewünschte und erforderliche Stellung oft nicht möglich ist und vor allem ohne Verdrehungsfehler nicht wiederholt erfolgen kann.

Außerdem hat sich herausgestellt, daß es im Bereich des Schaftes zum Einwachsen von Bindegeweben kommen kann, das gelegentlich über die Stege oder die Scheibe des Fußteiles des Implantats bis in die Bereiche der Kompakta gelangen kann und dadurch das Einwachsen des Implantates in den Kieferknochen erschwert und seinen festen Sitz verhindert. Hinzu kommt, daß der Gewindebereich stets mit Bakterien besiedelt wird.

Ein zweiteiliges Implantat, bestehend aus einem Schaft, der in den Ober- oder Unterkieferknochen eingebracht wird und einem nach Einheilen des Implantats auf den Schaft aufschraubbaren Abutement (Zwischenstück) zur Befestigung der Krone oder der Prothese ist aus EP 0 214 962 bekannt. Diese Lösung ist insofern mit dem vorstehend angeführten Nachteil behaftet, daß durch das intraoperative Verschrauben des im Kiefer eingesetzten Schaftes mit dem Abutement Fehler entstehen oder beim Einsetzen des Schaftes entstandene Fehler nicht ausgeglichen werden können und ein Einschrauben des Abutements in die gewünschte Stellung oftmals nicht möglich ist.

Der Erfindung liegt daher die Aufgabe zugrunde, ein weiter verbessertes, einstückig ausgebildetes und mit einem Abutement versehenes Kieferimplantat der eingangs genannten Gattung zu entwickeln.

Erfindungsgemäß wird die Aufgabe durch ein Implantat nach den im Anspruch 1 angegebenen Merkmalen gelöst. Vorteilhafte Weiterbildungen der Erfindung ergeben sich aus den Unteransprüchen 2 bis 11.

Das einstückig ausgebildete erfindungsgemäße laterale Kieferimplantat, dessen kraftübertragender Fußteil ein Ringkörper mit einem einseitig an die Innenwand des Ringkörpers angelenkten Steg ist, der in einen orthogonal zum Fußteil ausgerichteten Schaft mit einem biegbaren Hals übergeht, wobei sich an den biegbaren Hals ein in den Schaft integriertes Abutement zur Aufnahme der prothetischen Überkonstruktion anschließt - Anspruch 1 -, läßt sich in vorteilhafter Weise kostengünstig herstellen und hat den Vorteil, daß nach der Implantation im Mund des Patienten zum Implantat gehörende Bauteile nicht mehr zusammengefügt oder miteinander verschraubt werden müssen.

Gegenüber den bisher aus dem Stand der Technik bekannten, gattungsgemäßen Kieferimplantaten besitzt das vorgeschlagene Kieferimplantat im Hinblick auf die notwendigen operativen Maßnahmen zum Einbringen des Implantats in den Ober- und/oder Unterkierferknochen und bezüglich der notwendigen Anpassungsarbeiten beim Einsetzen der Überkonstruktion wesentliche Vorteile. Durch den einseitig, an die Innenwand des Fußteiles angelenkten Steg, der orthogonal in den Schaft des Implantats übergeht, wird zusätzlich die Gefahr verringert, daß das Bindegewebe über den Steg des Fußteils bis in die Bereiche der Kompakta hineinwächst.

Das Voranwachsen des Bindegewebes in Richtung auf die Kompakta erfolgt stets über die Stege. Es hat sich aber überraschenderweise ergeben, daß bei einer Verringerung der Stege sich auch die Verlustwahrscheinlichkeit für das Implantat verringert, ohne daß dadurch die Bruchhäufigkeit steigt.

Durch eine geeignete Materialauswahl des Implantats und eine entsprechende konstruktive Gestaltung im Halsteil des Schaftes, an den sich das Abutement anschließt, besteht die Möglichkeit, das Abutement im Mund des Patienten in die erforderliche Richtung zu biegen und dadurch die Voraussetzungen für ein paralleles Einbringen von mehrspannigen Brücken zu schaffen.

Vorteilhafterweise ist das Abutement so bemessen, daß eine Zementierung der Krone oder der Überkonstruktion vorgenommen werden kann und besitzt bei einer Ausbildung des Implantates als einfacher Zementierpfosten entsprechend Anspruch 7 kopfseitig ein Schraubengewinde. Dadurch ist es möglich, auch verschraubbare Brücken auf dem Implantat zu befestigen. Bekanntlich besteht das Problem, daß Brücken, die ausschließlich durch Zementierung befestigt worden sind, schlecht zu entfernen sind, sofern dies einmal erforderlich wird. Die erfindungsgemäße Lösung gestattet es aber, eine Brücke gleichzeitig durch Zementieren und Verschrauben zu befestigen. Auch wenn sich die Schraube einmal lösen sollte, wird die Brücke dadurch noch in ihrer Befestigung begrenzt gehalten und umgekehrt.

Durch die erfindungsgemäße Ausbildung der kraftübertragenden Fußteile als Ringkörper, die entsprechend Anspruch 2 bis 5 eine runde, elliptische oder eine durch Radien abgerundete eckige Körperform besitzen können, wird einerseits das Einwachsen des Fußteiles in den Ober- oder Unterkieferknochen beschleunigt und andererseits seine weitgehende Anpassung an die durch Ausfräsen hergestellte Operationsöffnung erreicht. Insbesondere durch die kombinierte Körperform gemäß Anspruch 5 ist der Fußteil nahezu identisch an die Form der durch Ausfräsung hergestellten Operationsöffnung angepaßt und füllt diese vollständig aus.

Nach einem weiteren Merkmal der Erfindung wird das kraftübertragende Fußteil durch mehrere voneinander beabstandete scheibenförmige Ringkörper gebildet, die jeweils über innenliegende Stege verfügen und untereinander durch einen orthogonal zum Fußteil ausgerichteten durchgehenden Schaft miteinander verbunden sind - Anspruch 6. Mit dieser Ausführungsform wird in vorteilhafter Weise eine Erhöhung der kraftübertragenden Flächen erreicht. Wie bekannt, werden Kräfte nur im Bereich des kompakten Knochens, d.h. im Bereich der Ringkörper des Fußteiles, übertragen, die hierfür vollständig innerhalb der Kompakta des Knochens liegen.

Nach Anspruch 8 und 9 weisen die übereinanderliegenden, voneinander beabstandeten Ringkörper unterschiedliche Außendurchmesser auf, wobei mindestens ein Ringkörper, vorzugsweise der untere Ringkörper, einen durchgehenden Steg besitzt, zu dem der einseitig an die Innenwand des anderen Ringkörpers angelenkte Steg unter einem Winkel von 30° bis 90°, vorzugsweise 90 °, angeordnet ist. Die so ausgebildeten Fußteile bieten eine weitgehende Anpassung des Implantates an die anatomischen Gegebenheiten und gewährleisten eine volle Ausnutzung der zur Verfügung stehenden Knochenbreite des Ober- und/oder Unterkiefers. Der durchgehende Steg des unteren Ringkörpers liegt dabei vollständig im spongiösen, weichen Knochenmark, während der obere, rechtwinklig zum durchgehenden, unteren Steg liegende Steg vollständig von der Kompakta des Knochens aufgenommen wird, und zwar auf der Knochenseite, die nach der Fräsung unverletzt ist.

In Abwandlung dieser Ausführung kann der untere Ringkörper eine vom oberen Ringkörper abweichende, eckige oder kombinierte Köperform besitzen und gegenüber diesen einen kleineren Außendurchmesser aufweisen. Die Implantate mit derart ausgebildeten Fußteilen bewähren sich insbesondere im Bereich der Arteria Palatina, wo der crestale Anteil des Kieferkamms breiter ist als der basale Anteil. Ein Öffnen der Arterie im Zusammenhang mit der Herstellung der Operationsöffnung zur Aufnahme des Implantates kann dadurch vermieden werden.

Durch einen größeren, 3 mm übersteigenden Abstand zwischen den Ringkörpern des Fußteiles - Anspruch 11 - wird nicht nur das Setzen des Implantates erleichtert und sein Halt im Ober- und/oder Unterkiefer verbessert, sondern auch eine bessere Durchblutung des Interdiskalbereiches erzielt, da der laterale Zufluß von der Schleimhaut her erweitert wird. Außerdem nimmt die Lateralstabilität des Implantates zu. Ferner ist der basale Ringkörper für den Fall der bakteriellen Besiedelung des crestalen Ringkörpers besser geschützt.

Implantat-Totalverluste werden vermindert. Zudem wird eine etwaige Entfernung des Implantates oder einer Scheibe des Implantates erleichtert. Das Einsetzen des Implantates kann ebenfalls sicherer ausgeführt werden. Insbesondere bei sprödem Knochen ist die Gefahr des Abrisses der osteotomierten Interdiskalbereiche geringer, wenn die Ringkörper weiter voneinander entfernt positioniert sind.

Um die Haftung des eingesetzten lateralen Kieferimplantats im Ober- oder Unterkiefer zu verbessern ist der Schaft im Bereich zwischen dem biegbaren Hals und dem Fußteil auf an sich bekannte Weise mit einer Kontur versehen, deren Durchmesser jedoch wesentlich kleiner ist als der Durchmesser des Fußteiles.

Die Erfindung soll nachstehend an einem Ausführungsbeispiel näher erläutert werden. In den dazugehörigen Zeichnungen zeigen:
- Fig. 1 -: eine erste Ausführungsform des erfindungsgemäßen Kieferimplantates mit einem ringförmigen Fußteil in vergrößerter Darstellung
- Fig. 2 -: die Draufsicht auf ein kraftübertragendes Fußteil mit einer kombinierten Körperform
- Fig. 3 -: die Draufsicht auf das Kieferimplantat nach Fig. 1
- Fig. 4 -: die Draufsicht auf ein Kieferimplantat nach der Erfindung mit einer weitere Ausführungsform des kraftübertragenden Fußteiles
- Fig. 5 -: das Kieferimplantat nach Fig. 1 mit einem kraftübertragenden Fußteil aus zwei voneinander beabstandeten Ringkörpern
- Fig. 6 -: die Ausführung des lateralen Kieferimplantates als einfacher Zementierpfosten

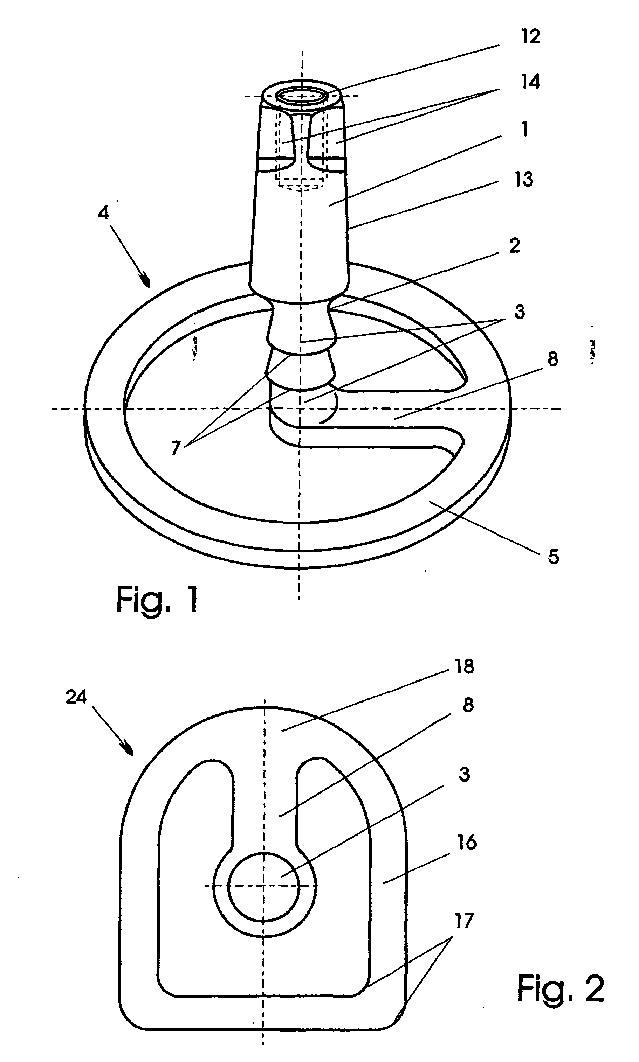

Wie aus Fig. 1 und 2 ersichtlich, besitzt das erfindungsgemäße einstückig ausgebildete laterale Kieferimplantat ein kraftübertragendes Fußteil 4 in Form eines Ringkörpers 5 mit einem einseitigen, an die Innenwand 20 des Ringkörpers 5 angelenkten Steg 8, der in einen Schaft 3 übergeht. Beim Einsetzen des Implantats wird dieser Steg 8 durch den Operateur in den gegen Resorptionen stabilsten Knochen, also vornehmlich im Bereich des Oberkiefers am Palatum oder im Bereich des Unterkiefers, lingual eingebracht.

Der orthogonal zum Fußteil 4 ausgerichtete Schaft 3 geht in einen biegbaren Hals 2 über, an den sich ein Abutement 1 (Zwischenstück) zur Aufnahme der prothetischen Überkonstruktion anschließt. Das Abutement 1 besitzt an seiner freien Stirnseite Aufnahmeflächen 14 und ein Anschlußgewinde 12, das eine Verschraubung des Implantats mit der prothetischen Überkonstruktion ermöglicht.

Im Bereich des Schaftes 3 zwischen dem Hals 2 und dem Fußteil 4 ist eine Kontur 7 vorgesehen, deren größter Durchmesser wesentlich kleiner als der Durchmesser des Ringkörpers 5 des Fußteiles 4 ist und das, wie vorstehend beschrieben, zur Verbesserung der Haftung des eingesetzten Implantats im Ober- oder Unterkiefer beiträgt, indem das Tieferwachsen von Bindegewebe verhindert und ein festes Anwachsen von Knochen unterstützt wird.

Das mit einem Anschlußgewinde 12 ausgestattete Abutement 1 bietet die Möglichkeit, die prothetische Überkonstruktion mit dem im Ober- oder Unterkiefer eingesetzten Implantat zu verschrauben und auf die Außenfläche 13 des Abutements 1, die in an sich bekannter Weise kegelförmig ausgebildet ist, eine retentive Zementierung und oder eine verfugende Abdichtung zwischen der Aufnahmefläche für das Implantat in der Überkonstruktion und der Außenfläche 13 des Abutements 1 aufzubringen.

Wie aus den Fig. 1 bis 3 hervorgeht, kann der Ringkörper 5 des Fußteiles 4 eine beliebige zylindrische, elliptische, eckige oder eine kombinierte Körperform besitzen, wobei die Kanten der eckigen Körperformabschnitte durch Radien 17 abgerundet sind. Durch diese unterschiedlichen Körperformen ist auf relativ einfache Weise eine weitgehende Anpassung der Fußteile an das jeweils verwendete Fräswerkzeug bzw. an die im Ober- oder Unterkiefer vom Operateur eingebrachten Operationsöffnung zur Aufnahme des Implantats gegeben. Der einseitig an die Innenwand des runden/zylindrischen Abschnittes der Fußteile 4; 16; 24 angelenkte Steg 8 verschwindet dabei vollständig in die Tiefe des Knochens und ist so von Anfang an nicht dem Bewuchs der schneller wachsenden Schleimhaut ausgesetzt.

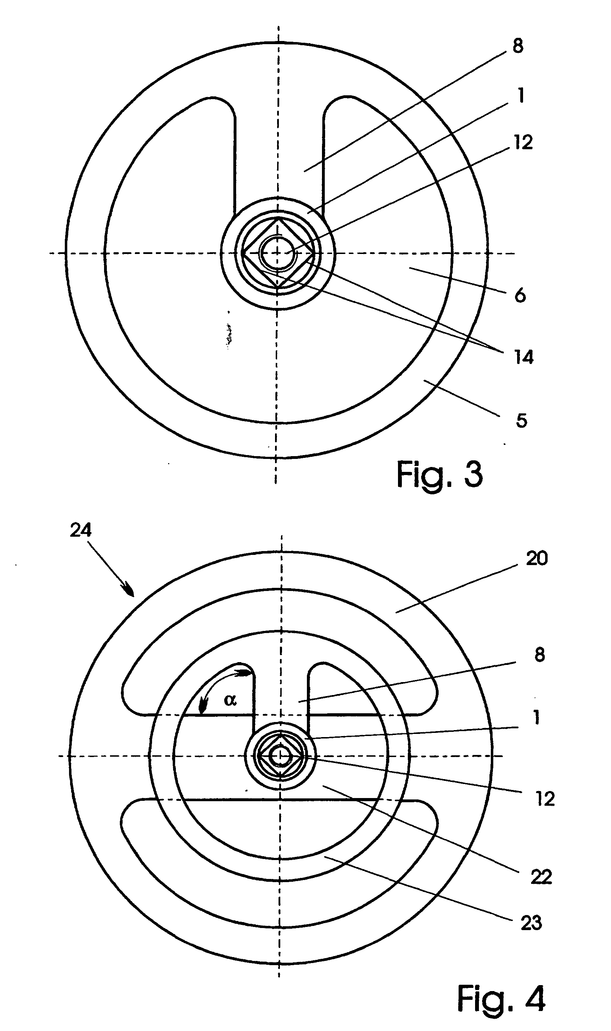

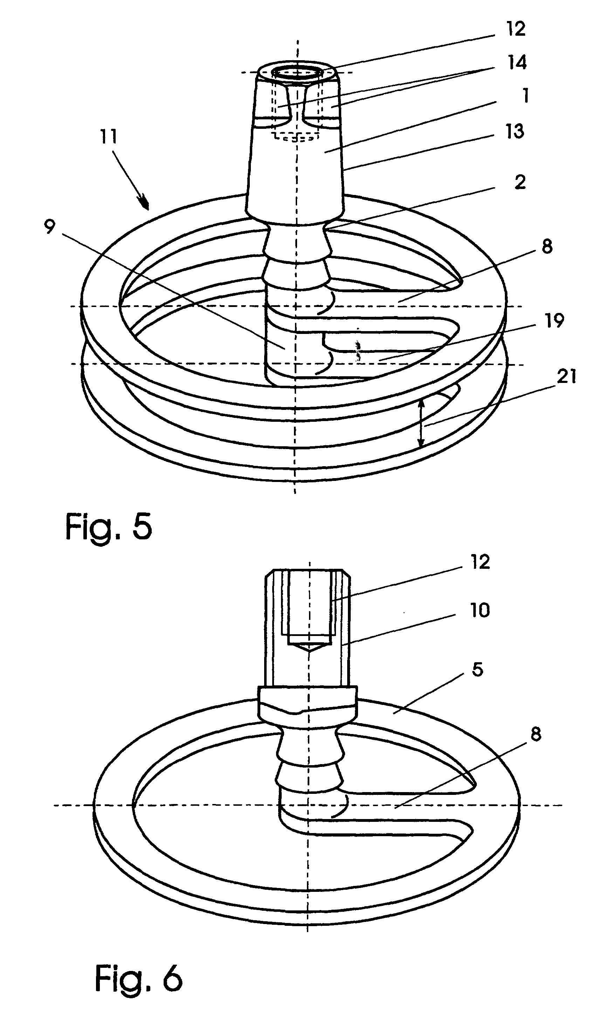

Die in Fig. 4 und 5 gezeigten Ausführungen des Kieferimplantats besitzen im wesentlichen den gleichen konstruktiven Aufbau und sind abweichend von der Ausführung gemäß Fig. 1 zur Verbesserung des Sitzes im Kieferknochen mit zwei voneinander beabstandeten Ringkörpern 5; 16 versehen, die den Fußteil 4 der Implantate bilden. Beide Ringkörper 5; 16 besitzen entsprechend der vorliegenden Erfindung einseitige Stege 8; 19, die an der Innenwand des Ringkörpers 5; 16 angelenkt und durch einen durchgehenden Schaft 9 miteinander verbunden sind.

Unter Fortfall des Abutements 1 mit kegelförmiger Außenfläche 13 kann der Schaft 3 des nach der Erfindung ausgebildeten Implantats ein einfacher mit einem stirnseitigen Schraubengewinde 10 versehener zylindrischer Körper sein, der orthogonal zum Fußteil 4 des Implantats ausgerichtet ist und als einfacher Zementierpfosten zur Aufnahme oder Träger einer Krone oder einer Brücke dienen.

### Bezugszeichenaufstellung

- 1: Abutement
- 2: Hals
- 3: Schaft
- 4: Fußteil
- 5: Ringkörper
- 6: Aussparung
- 7: Kontur
- 8: Steg
- 9: Schaft
- 10: Schraubengewinde
- 11: Fußteil
- 12: Innengewinde
- 13: Mantelfläche
- 14: Aufnahmeflächen
- 16: Formabschnitt
- 17: Radius
- 18: Ringabschnitt
- 19: Steg
- 20: Ringkörper
- 21: Abstand
- 22: Steg
- 23: Ringkörper
- 24: Fußteil

## Patentansprüche

1. Laterales Kieferimplantat mit einem oder mit mehreren kraftübertragenden Fußteilen (4) und einem die prothetische Überkonstruktion aufnehmenden Abutement (1), wobei der Fußteil (4) ein Ringkörper (5) mit einem Steg (8) ist, der in einen orthogonal zum Fußteil (4) ausgerichteten Schaft (3) mit einem biegbaren Hals (2) übergeht **dadurch gekennzeichnet, daß** der Steg einseitig ist und an die Innenwand des Ringkörpers angelenkt ist, und daß der fußteil kopfseitig mit einem einstückig im Schaft ausgebildeten Abutement (1) abschließt, das so bemessen ist, daß eine retentive Zementierung oder eine verfugende Abdichtung der aufgesetzten Überkonstruktion vorgenommen werden kann.

2. Laterales Kieferimplantat nach Anspruch 1, **dadurch gekennzeichnet, daß** der Ringkörper (5) rund ist.

3. Laterales Kieferimplantat nach Anspruch 1, **dadurch gekennzeichnet, daß** der Ringkörper (5) eine elliptische Körperform besitzt.

4. Laterales Kieferimplantat nach Anspruch 1, **dadurch gekennzeichnet, daß** der Ringkörper (5) eine eckige Körperform aufweist.

5. Laterales Kieferimplantat nach Anspruch 1, **dadurch gekennzeichnet, daß** der kraftübertragende Fußteil (24) einen eckigen Formabschnitt (16) besitzt, an den ein kreisförmiger Ringabschnitt (18) angeschlossen ist, wobei der einseitige Steg (8) an die Innenwand des Ringabschnittes (18) angelenkt und die Ecken des Formabschnittes (16) durch Radien (17) abgerundet sind.

6. Laterales Kieferimplantat nach einem der Ansprüche 1 bis 5, **dadurch gekennzeichnet, daß** der kraftübertragende Fußteil (11) durch mehrere voneinander beabstandete scheibenförmige Ringkörper (5; 16) gebildet wird, die über innenliegende Stege (8; 19) und einen zum Fußteil (11) orthogonal ausgerichteten, durchgehenden Schaft (9) miteinander verbunden sind.

7. Laterales Kieferimplantat nach einem der Ansprüche 1 bis 6, **dadurch gekennzeichnet, daß** der Schaft (8) als einfacher Zementierpfosten ausgebildet ist und kopfseitig ein Schraubengewinde (10) besitzt.

8. Laterales Kieferimplantat nach einem der Ansprüche 1 bis 7, **dadurch gekennzeichnet, daß** das kraftübertragende Fußteil (24) aus zwei übereinander angeordneten Ringkörpern (20; 23) mit unterschiedlichem Außendurchmesser besteht, wobei mindestens ein Ringkörper (20; 23) einen durchgehenden Steg (22) besitzt und die Stege (8; 22) der Ringkörper (20; 23) zueinander in einem Winkel α von 30° bis 90° positioniert sind.

9. Laterales Kieferimplantat nach einem der Ansprüche 1 bis 8, **dadurch gekennzeichnet, daß** der gegenüber dem Abutement (19) entfernt positionierte Ringkörper (20) einen größeren Außendurchmesser und eine von der zylindrischen Körperform abweichende elliptische, eckige oder kombinierte Körperform entsprechend Anspruch 4 besitzt, während der zum Abutement (1) benachbarte Ringkörper (23) eine runde Körperform mit einem kleineren Außendurchmesser aufweist.

10. Laterales Kieferimplantat nach einem der Ansprüche 8 und 9, **dadurch gekennzeichnet, daß** die Ringkörper (20; 23) über einseitige Stege (8; 19) mit dem durchgehenden Schaft (9) des Implantates verbunden und die Stege (8; 19) jeweils an die Innenwände der runden Ringabschnitte der Ringkörper angelenkt sind.

11. Laterales Kieferimplantat nach einem der Ansprüche 1 bis 10, **dadurch gekennzeichnet, daß** der Abstand (21) der übereinander angeordneten Ringkörper (20; 23) größer als 3 mm ist.

## Claims

1. Lateral jaw implant having one or more force-transferring foot parts (4) and an abutment (1) which holds the prosthetic superstructure, in which the foot part (4) is an annular body (5) with a crossbar (8) which transforms into a shaft (3) directed orthogonally to the foot part (4) having a flexible neck (2),
**characterized in that** the crossbar is on one side and is joined to the inside wall of the annular body, and that the foot part terminates at the head end with an abutment (1) made integral with the shaft, which is dimensioned so that a retentive cementation or an available seal of the superstructure set upon it can be undertaken.

2. Lateral jaw implant according to Claim 1, **characterized in that** the annular body (5) is circular.

3. Lateral jaw implant according to Claim 1, **characterized in that** the annular body (5) has an elliptical shape.

4. Lateral jaw implant according to Claim 1, **characterized in that** the annular body (5) has an angular shape.

5. Lateral jaw implant according to Claim 1, **characterized in that** the force-transferring foot part (24) has an angular section (16) to which a circular annular section (18) is joined, such that the one-sided crossbar (8) joins the inside wall of the annular section (18) and the comers of the section (16) are rounded to radii (17).

6. Lateral jaw implant according to one of Claims 1 to 5, **characterized in that** the force-transferring foot part (11) is formed by multiple disk-shaped annular internal cross-bars (8, 19) and a continuous shaft (9) which is directed orthogonally to the foot part (11).

7. Lateral jaw implant according to one of Claims 1 to 6, **characterized in that** the shaft (8) is made as a simple cementation post and has a screw thread (10) at its head end.

8. Lateral jaw implant according to one of Claims 1 to 7, **characterized in that** the force-transferring foot part (24) comprises two superimposed annular bodies (20, 23) having different diameters, with at least one annular body (20, 23) having a crossbar (8) going all the way across, and that the crossbars (8, 22) of the annular bodies (20, 23) are positioned at a relative angle α of 30° to 90°.

9. Lateral jaw implant according to one of Claims 1 to 8, **characterized in that** the annular body (20) positioned away from and opposite to the abutment (19) has a larger outside diameter and has an elliptical, angular, or combined shape according to Claim 4, different from the circular shape, while the annular body (23) adjacent to the abutment (1) has a circular shape with a smaller outside diameter.

10. Lateral jaw implant according to one of Claims 8 and 9, **characterized in that** the annular bodies (20, 23) are connected to the continuous shaft (9) of the implant through one-sided crossbars (8, 19) and that the crossbars (8, 19) are each joined to the inner wall of the circular ring section of the annular body.

11. Lateral jaw implant according to one of Claims 1 to 10, **characterized in that** the separation (21) between the two superimposed annular bodies (20, 23) is greater than 3 mm.

## Revendications

1. Implant dentaire latéral avec une ou plusieurs parties de pied (4) transmettant la force est une butée (1) recevant la superstructure prothétique, la partie de pied (4) étant un élément annulaire (5) avec une barrette (8) à laquelle succède une tige (3) avec un collet (2) flexible orientée perpendiculairement à la partie de pied (4), **caractérisé en ce que** la barrette est prévue sur un seul côté et articulée sur la paroi intérieure de l'élément annulaire, et **en ce que** la partie de pied se termine du côté de sa tête par une butée (1) formée d'un seul tenant dans la tige et dimensionnée de telle sorte qu'un scellement de rétention ou un jointoiement étanche de la superstructure posée puisse être réalisé.

2. Implant dentaire latéral selon la revendication 1, **caractérisé en ce que** l'élément annulaire (5) est rond.

3. Implant dentaire latéral selon la revendication 1, **caractérisé en ce que** l'élément annulaire (5) a une forme de corps elliptique.

4. Implant dentaire latéral selon la revendication 1, **caractérisé en ce que** l'élément annulaire (5) a une forme de corps angulaire.

5. Implant dentaire latéral selon la revendication 1, **caractérisé en ce que** la partie de pied (24) transmettant la force possède un segment de forme angulaire (16), auquel se raccorde un segment annulaire (18), la barrette unilatérale (8) étant articulée sur la paroi intérieure du segment annulaire (18) et les angles du segment de forme (16) étant arrondis en arc de cercle (17).

6. Implant dentaire latéral selon l'une quelconque des revendications 1 à 5, **caractérisé en ce que** la partie de pied (11) transmettant la force est formée des autres, qui sont reliés entre eux par des barrettes (8 ; 19) situées à l'intérieur et une tige (9) continue orientée perpendiculairement à la partie de pied (11).

7. Implant dentaire latéral selon l'une quelconque des revendications 1 à 6, **caractérisé en ce que** la tige (8) est conformée comme un pilier à sceller simple et possède un filetage (10) du côté de la tête.

8. Implant dentaire latéral selon l'une quelconque des revendications 1 à 7, **caractérisé en ce que** la partie de pied transmettant la force (24) est composée de deux éléments annulaires (20 ; 23) superposés ayant un diamètre extérieur différent, un élément annulaire (20 ; 23) au moins possédant une barrette (22) continue et les barrettes (8 ; 22) de l'élément annulaire (20 ; 23) étant positionnées l'une par rapport à l'autre selon un angle α de 30° à 90°.

9. Implant dentaire latéral selon l'une quelconque des revendications 1 à 8, **caractérisé en ce que** l'élément annulaire (20) éloigné de la butée (19) a un plus grand diamètre extérieur et une forme elliptique, anguleuse ou combinée selon la revendication 4 et différente de la forme de corps cylindrique, tandis que l'élément annulaire (23) voisin de la butée (1) a une forme de corps ronde avec un plus petit diamètre extérieur.

10. Implant dentaire latéral selon l'une quelconque des revendications 8 et 9, **caractérisé en ce que** les éléments annulaires (20 ; 23) sont reliés par des barrettes unilatérales (8 ; 19) à la tige (9) continue de l'implant et les barrettes (8 ; 19) sont articulées chacune sur les parois intérieures des segments annulaires ronds des éléments annulaires.

11. Implant dentaire latéral selon l'une quelconque des revendications 1 à 10, **caractérisé en ce que** la distance (21) entre les éléments annulaires (20 ; 23) situés l'un au-dessus de l'autre est supérieure à 3 mm.
